# EUROPEAN PATENT SPECIFICATION

(11) **EP 1 157 608 B1**
(45) Date of publication and mention of the grant of the patent: **06.08.2003**
(21) Application number: 01500125.8
(22) Date of filing: 18.05.2001
(51) Int. Cl.: A01K 1/01, A01K 1/00

(54) **Cat litter box**
Katzenstreubehälter
Boîte à litière pour chats

(30) Priority: 24.05.2000 ES 200001386
(43) Date of publication of application: 28.11.2001
(73) Proprietor: Ramon Goitiandia, Emilio, 48012 Bilbao (ES)
(72) Inventor: Ramon Goitiandia, Emilio, 48012 Bilbao (ES)
(74) Representative: Davila Baz, Angel

(56) References cited:
- FR-A- 2 608 012
- FR-A- 2 653 297
- FR-A- 2 754 421
- JP-A- 2001 072 042
- US-A- 3 684 155
- US-A- 4 056 221
- US-A- 4 646 685
- US-A- 4 720 039
- US-A- 4 791 833
- US-A- 4 800 841
- US-A- 5 035 205
- US-A- 5 065 702
- US-A- 5 115 766
- US-A- 5 249 550
- US-A- 5 572 951
- US-A- 5 575 418
- US-A- 5 794 812

## Description

The present invention relates to a cat litter box for containing an absorbent material, generally in the form of sand or the like, with special characteristics, for offering the animal a means and place for relieving itself.

Traditional cat litter boxes consist of a tray made of plastic material, such a PVC, of generally rectangular contours and with relatively low walls.

These litter boxes present two major drawbacks: the first is their lack of hygiene, given that, although they are cleaned regularly, the plastic used in their construction ultimately deteriorates, allowing the encrustation of residues which are impossible to remove, despite the use of strong products such as bleach. These deposits are real foci of micro-organisms which are harmful to the health of the animal and, more importantly, to all those living in its environment. The second drawback is the litter boxes' handling for cleaning, since, given the size of traditional litter boxes, they are difficult to manipulate because they do not easily fit into a standard sink, with the result that they frequently have to be cleaned in a bath tub. Whether they are cleaned in a bath tub or in a sink, they can give rise to contamination and, in any case, it is unpleasant for anyone to wash the tray in the same places as are used for family hygiene.

This situation means than litter-box cleanliness is frequently disregarded, which ends in producing foul smells and results in the litter box being rejected by the animal, who prefers to relieve itself outside the litter box. This is an especially delicate point in the case of cats, as they are scrupulously clean animals who prefer to use any corner in preference to entering a soiled enclosure.

A subject of the present invention is a cat litter box which eliminates the hygiene and cleaning problems set forth.

To this end, the litter box of the invention is designed as a disposable article, allowing it to be replaced with sufficient frequency for hygiene problems not to arise, all this without the need to have to carryout the operations of cleaning traditional litter boxes.

According to the present invention, the litter box is constructed from a template which is composed of a rigid cardboard base and an impermeable laminar covering of plastic material.

The cardboard base consists of a sheet which includes a rectangular central zone which defines the bottom, which is extended from its edges into smaller rectangular zones which will define the side walls. The zone of the bottom and that of the side walls are separated by fold lines which will facilitate the making-up of the assembly.

The laminar covering proper is composed of two sheets whose contour is slightly larger than that of the sheets which form the cardboard base. These two sheets are joined together via their edges, enclosing the cardboard base between them in a close-fitting manner. The two sheets which form the covering are superposed on the angle portions delimited between each two consecutive walls of the cardboard base. These portions, when the assembly is made up, will define closure flaps. In these portions, the two sheets are also joined along a line coinciding with the contour of the angle limited between each two consecutive walls of the cardboard base and along a diagonal line which crosses between the inner angle and the outer angle. These joining lines delimit zone which, when the assembly is made up, externally folded back onto the walls, to which they are fixed by means of an adhesive strip or the like.

All the joining lines between the two sheets which form the impermeable covering may be obtained by heat-welding.

The characteristics and advantages of the litter box of the invention may be better understood from the following description which is made with reference to the appended drawings, which show a non-limiting illustrative embodiment.

In the drawings:
Figure 1 shows the layout of the cardboard base which forms part of the template which constitutes the litter box of the invention.
Figure 2 shows the layout of the laminar covering of the template which forms the litter box.
Figure 3 shows the layout of the template composed of the cardboard base of Figure 1 and the covering of Figure 2.
Figure 4 is a partial section of the template, obtained along the sectional line IV-IV of Figure 3.
Figure 5 shows the template of Figure 3 in the folded position.
Figure 6 is a perspective view of the litter box made up from the template of Figure 3.

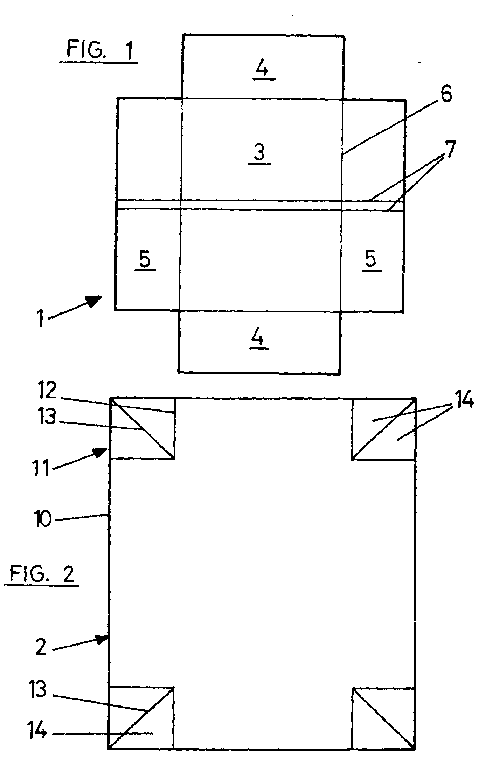

As set forth above, the litter box of the invention, shown in Figure 6, is constructed from a template composed of a rigid cardboard base 1 (Figure 1) and of an impermeable laminar covering of plastic material 2 (Figure 2).

The cardboard base 1 consists of a plate of rigid cardboard which constitutes a rectangular central zone 3, which will define the bottom of the litter box, surrounded by four smaller rectangular zones referenced with numbers 4 and 5, which will define the walls, these peripheral zones being separated from the central zone 3 by folding lines 6. The central zone 3 and the peripheral zones 5 may be traversed via their central part by a double fold line which is referenced with number 7.

The laminar element 2 consists, as may be seen best from Figures 2 and 4, by two sheets 8 and 9 with a contour which is slightly greater than the maximum of the cardboard base 1, so that they project slightly from the edge of the peripheral portions 4 and 5 of the cardboard base 1. In this way, the sheets 8 and 9 back onto one another via their edges, which are joined by means of a peripheral line 10, for example by heat-welding.

In the laminar covering thus constituted, the sheets 8 and 9 are superposed in corner zones 11 limited between each two consecutive walls 4 and 5 of the cardboard base 1. In these zones, the two sheets 8 and 9 are joined by an angle line 12 coinciding with the contour of the angle limited between the two consecutive walls 4 and 5 of the cardboard base in addition, they are also joined by a diagonal line 13 which runs between the inner and outer angle. The weld lines 12 and 13 delimit zones 14 which will be used for making up the assembly, as will be explained with reference to Figure 6.

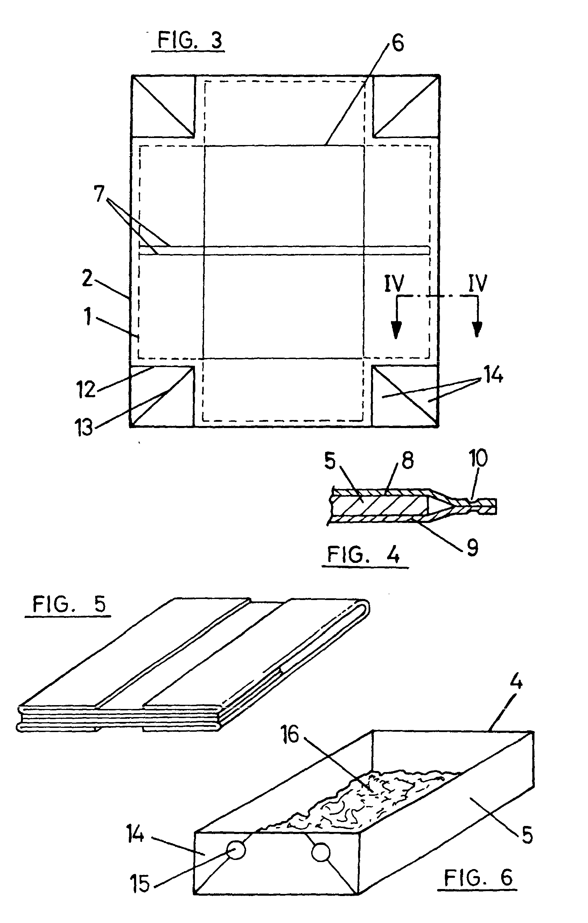

The template constituted in accordance with the invention, shown in Figure 3, includes the cardboard base 1 which is protected by the impermeable laminar covering formed by sheets 8 and 9.

Owing to the reduced thickness of the sheets which form the impermeable covering, the template of Figure 3 may be folded along the lines 6 and 7 of the cardboard base of Figure 1. For storage and transportation of the templates, they may be arranged as shown in Figure 1, the templates being folded via the two longitudinal fold lines 6 and then via the double transverse fold lines 7. The templates may be arranged thus in stacks, occupying a small space.

In order to proceed to making up the litter box, as shown in Figure 6, folding is carried out in the same direction via fold lines 6 of the cardboard base 1, the walls 4 and 5 being in a position perpendicular to the base 3. The corner zones 11 are folded and the diagonal joining line 12, the portions 14 backing onto the outer surface of the small walls 4, for example, to which they are joined by means of an adhesive strip or seal.

A litter box is thus obtained which has a right-angled rectangular prismatic configuration, whose strength is defined by the cardboard base 1 and whose impermeable nature is achieved by the covering formed on the basis of the sheets of plastic 8 and 9. The sand 16 which will offer an appropriate means for the cat to relieve itself is poured inside this litter box. In the litter box of the invention, the absorbent material 16 may be renewed in the same way as in traditional trays. Once the litter box has been reused a specific number of times, it may be folded up in order to be thrown out with the trash.

As the template which forms the litter box is covered with two layers of plastic, its impermeability is guaranteed, offering the litter box a non-leak closure system.

Manufacture of the litter box requires no complex technology, since both the cardboard base 1 and the covering may be produced by traditional stamping and heat-welding machines.

## Claims

1. Cat litter box, of right-angled rectangular prismatic configuration, which is formed from a template composed of a rigid cardboard base (1) and by an impermeable laminar covering of plastic material (2), which cardboard base (1) defines the bottom and side walls and has fold lines which delimit said zones and allow the assembly to be made up; and which laminar covering is composed of two flexible sheets (8,9) with a contour which is slightly greater than that of the cardboard base, which sheets are joined together via their edges and delimit, between each two consecutive walls (4,5) of the cardboard base, a zone which, when the assembly is made up, forms closure flaps.

2. The litter box according to claim 1, wherein the cardboard base has four single fold lines (6), coinciding with the contour of the bottom, and double fold line (7) which transversely crosses the bottom and large walls via their central part.

3. The litter box according to any of the preceding claims, wherein the sheets of plastic material (8,9) have a rectangular contour, with a length and width which are slightly greater than the cardboard base, and they are joined, by means of heat-welding, via their coinciding edges and at each comer along an inner angle line (12) coinciding with the contour of the angle limited between each two consecutive walls (4,5) of the cardboard base (1), and along a diagonal line (13) which crosses between the inner and outer angles, delimiting zones which, when the assembly is made up, externally fold back onto the walls, to which they are fixed by means of an adhesive strip or seal.

4. The litter box according to any of claims 1 and 2, wherein the sheets of plastic material (8, 9) are joined together by a peripheral line (10).

5. The litter box according to claim 4, wherein the sheets of plastic material (8, 9) are joined together by the peripheral line (10) by means of heat-welding.

6. Use of litter box according to any of the preceding claims, as a cat litter box for offering a cat a place for relieving itself.

## Patentansprüche

1. Katzenstreubehälter in rechtwinkliger rechteckiger prismatischer Anordnung, der aus einer Schablone gebildet ist, die sich aus einem steifen Grundkarton (1) und einer undurchlässigen lamellaren Hülle aus Kunststoffmaterial (2) zusammensetzt, der Grundkarton (1) den Boden und die Seitenwände definiert und Faltlinien aufweist, welche die Zonen abgrenzen und die es ermöglichen den Aufbau fertig zustellen, und die lamellare Hülle aus zwei flexiblen dünnen Lagen (8, 9) besteht, mit einem Umriss, der etwas größer als der des Grundkartons ist, die dünnen Lagen über ihre Ränder zusammengefügt sind und die jeweils zwischen zwei aufeinander folgenden Wänden (4, 5) des Grundkartons eine Zone begrenzen, die Verschlusslaschen bildet, wenn der Aufbau fertig gestellt ist.

2. Streubehälter nach Anspruch 1, worin der Grundkarton vier einzelne Faltlinien (6), die mit dem Umriss des Bodens übereinstimmen und eine Doppel-Faltlinie (7) aufweist, die den Boden und die großen Wände über ihren Mittelteil quer durchkreuzt

3. Streubehälter nach einem der vorhergehenden Ansprüche, worin die dünnen Lagen aus Kunststoffmaterial (8, 9) einen rechteckigen Umriss aufweisen, mit einer Länge und Breite, die etwas größer als der Grundkarton sind und sie mittels Wärmeschweißung verbunden sind, über ihre übereinstimmenden Ränder und an jeder Ecke entlang einer inneren Winkellinie (12), die mit dem Umriss des Winkels übereinstimmt, der jeweils zwischen zwei aufeinander folgenden Wänden (4, 5) des Grundkartons (1) begrenzt wird und längs einer diagonalen Linie (13), die zwischen den inneren und äußeren Winkeln kreuzt und Zonen abgrenzt, die, wenn der Aufbau fertig gestellt ist, von außen auf die Wände umgefaltet sind, an denen sie mittels eines Klebestreifens oder eines Verschlusses befestigt sind.

4. Streubehälter nach einem der Ansprüche 1 und 2, worin die dünnen Lagen aus Kunststoffmaterial (8, 9) an einer Umfangslinie (10) zusammengefügt sind.

5. Streubehälter nach Anspruch 4, worin die dünnen Lagen aus Kunststoffmaterial (8, 9) an einer Umfangslinie (10) mittels Wärmeschweißung zusammengefügt sind.

6. Verwendung eines Streubehälters nach einem der vorhergehenden Ansprüche als Katzenstreubehälter um einen Ort anzubieten, an dem sich eine Katze erleichtern kann.

## Revendications

1. Caisse litière pour chat, de configuration prismatique à angle droit, que est formée à partir d'un patron composé d'une base (1) et d'une couverture en feuille imperméable en matériau plastique (2), la base en cartonnage (1) définissant le fond et des parois latérales et ayant des lignes de pliage délimitant ces zones et permettant de former l'assemblage, et la couverture en feuille est composée de deux feuilles flexibles (8, 9) avec un contour qui est légèrement plus grand que celui de la base en cartonnage, les feuilles sont mutuellement reliées par leurs bords et délimitent, entre chaque fois deux parois consécutives (4, 5) de la base en cartonnage, une zone qui, lorsque le montage est fait, forme des volets de fermeture.

2. Caisse litière selon la revendication 1, dans laquelle la base en cartonnage comporte quatre lignes à simple pliage (6), coïncidant avec le contour du fond, et une ligne à double pliage (7) qui traverse transversalement le fond et de grandes parois via leur partie centrale.

3. Caisse litière selon l'une quelconque des revendications précédentes, dans laquelle les feuilles en matériau plastique (8, 9) ont un contour rectangulaire, avec une longueur et une largeur qui sont légèrement plus grandes que la base en cartonnage, et elles sont reliées, par soudage à chaud, via leurs bords coïncidant et à chaque coin le long d'une ligne d'angle interne (12) coïncidant avec le contour de l'angle limité entre chaque fois deux parois consécutives (4, 5) de la base en cartonnage (1), et le long d'un long en diagonale (13) traversant entre les angles interne et externe, délimitant des zones qui, lorsque le montage est fait, se replient à l'extérieur sur les parois, auxquelles elles sont fixées au moyen d'une bande adhésive ou d'un joint.

4. Caisse litière selon l'une quelconque des revendications 1 et 2, dans laquelle les feuilles de matériau plastique (8, 9) sont reliées ensemble par une long périphérique (10).

5. Caisse litière selon la revendication 4, dans laquelle les feuilles de matériau plastique (8, 9) sont reliées ensemble par la long périphérique (10) par soudage à chaud.

6. Utilisation d'une caisse litière selon l'une quelconque des revendications précédentes, comme caisse litière à chat pour offrir à un chat un endroit pour se reposer.
